# EUROPEAN PATENT APPLICATION

(11) **EP 2 361 698 A1**
(43) Date of publication of application: **31.08.2011**
(21) Application number: 09166275.9
(22) Date of filing: 23.07.2009
(51) Int. Cl.: B09B 1/00, F16L 29/00, E21B 43/00, E21B 33/00

(54) **Gas Well Connector and Method of using same**

(71) Applicant: Enviro Seal Ltd, Rugby Warwickshire CV22 7DX (GB)
(72) Inventor: Couchin, Mark, Barnsley, South Yorkshire S751HA (GB); Harisson, Steven, Rugby, warwickshire CV22 7EL (GB); Turney, William Edward, Skelmersdale, lancashire WN8 6EN (GB)
(74) Representative: Coulson, Elizabeth Eve

(57) **Abstract**

In land-fill refuses gases such as methane are captured and conducted to a storage or to a power generation installation. When material is added to the land-fill above the original gas capture installation the original installation is unable to capture the gas produced from the additional material. The original wellhead is removed and a connector conduit (21) is installed on the lower perforated gas capture conduit. An upper capture conduit (23) with lateral capped production stub (29) and capping means (12) is connected to connector conduit (21). Blanking plates (24,25) are sealing off the connector to prevent cross-contamination between the gases in lower and upper capture pipes. When the landfill material has risen to a level covering the upper filter material (31) a hole is cut through blanking plates (24,25) and gas from the entire depth of the landfill is produced through upper production stub (29).

## Description

### Field of the Invention

The invention generally relates to the field of connectors for gas pipes and methods of use thereof. More specifically, though not exclusively, the invention relates to connector for coupling the gas capture pipes of gas well assemblies to extended gas capture pipes, thereby to extend the useful length of the gas well assembly, and methods of using the same.

### Background to the Invention

Where material, such as land-fill refuse, gives off gasses, such as methane, it is advantageous that that gas be captured and conducted to a desired location, be it storage or some form of power generator (in the case of flammable gasses like methane).

It is known, in the art, that this may be achieved by boring a well into the waste material, and inserting a perforated (or similarly gas-porous) pipe, which pipe is then connected, at a free end, to a low pressure source such that the gasses passing from the waste material into the pipe are drawn off for subsequent use. This arrangement of gas porous pipe buried in the land-fill material is generally called a "gas well".

Typically in the case of land-fill sites, the level of the waste material increases slowly over time (as more material is added), and it is desirable that the drawing off of the gasses begin as soon as possible, so that the gasses are not wasted through loss into the atmosphere, and/or the site does not fall foul of regulations on emissions. For this reason it is common practice to install a gas well early on, when the depth of the material is relatively low. As more material is added to the original level, the material extends upwardly, above the gas porous portions of the pipe. Since gas tends to bubble upward towards the surface, the original pipe is unable to capture the gas produced from this additional material and therefore an increasing proportion of the gas from the site escapes capture as time goes on.

Current processes for gas extraction involve extending the existing gas well utilising plain or solid pipe lengths as the waste material is in-filled. This process does not allow the gas from the additional waste mass to be collected. When it is required to extract the gas from the additional waste materials the first gas well is abandoned and a new longer gas well is installed at an adjacent or convenient location offset from the first. This new gas well reaches the same lowest point in the land-fill material as the first and is therefore capable of drawing in gasses produced from the land-fill material over substantially its entire depth. Potentially this second pipe is also eventually abandoned and a third pipe installed at yet another location. This process continues on until the material reaches a maximum level.

The above process is wasteful of materials (such as the pipes), real estate (the land fill site has a finite area) and money (the drilling of each well costs a significant sum). It would, therefore, be greatly advantageous to offer a means by which a single gas well may be used over the entire life of the site, even as the upper level of the material around the pipe rises beyond its initial height.

The present invention seeks to at least partially meet this need, by overcoming or at least mitigating the drawbacks of known gas well systems and methods of application.

### Summary of the Invention

A first aspect of the present invention provides a gas well connector for connecting a gas well assembly to an extended gas capture conduit, which gas well connector comprises a connector conduit for conducting gas from the gas well assembly to the extended gas capture conduit, the connector conduit comprising a closing means that prevents cross-contamination between the gas well and the extended gas capture conduit.

Preferably, the closing means comprises at least one blanking pate secured within the connecting conduit to seal that conduit between two ends thereof.

Preferably the gas well, further comprises means for coupling the connector conduit, at one end thereof, to the gas well and at the other end thereof to the extended gas capture conduit.

Preferably, the gas well connector is coupled to or formed integrally with one or more of: a) the gas well; and b) the extended gas capture conduit.

A second aspect of the represent invention provides a method of extending a gas well, which method comprises securing an extended gas capture conduit to the gas well using a gas well connector, and in particular, the gas well connector described above.

Preferably, the method further comprises forming a seal within the gas well connector with a closing means for preventing gas communication between tan interior volume of the gas well (1) and an interior volume of the extended gas capture conduit.

Preferably, the method further comprises opening the closing means in the gas well connector to allow gas communication between the interior volume of the gas well and the interior volume of the extended gas capture conduit.

Preferably, the method further comprises capping the end of the extended gas capture conduit with a well head, which well head has a releasable capping means, the method additionally comprising removing said capping means and employing an opening means to provide said opening of the closing means.

Preferably, the method further comprises fitting an access means to the extended gas capture conduit, which access means allows gasses contained in an interior volume of the extended gas capture conduit to be drawn out therethrough.

Preferably, the method further comprises drawing off gasses through the access means.

Preferably, the method further comprises providing a first volume of filter material around the gas well and around the extended gas capture conduit to prevent any material in which the gas well and the extended gas capture conduit are situated from contacting the gas capture conduit of the gas well or the extended gas capture conduit.

Preferably, the method further comprises providing one or more of: a) a second filter material; and b) a cage, around the first filter material to maintain the desired arrangement of the first filter material.

Preferably, the first filter material is hard-core and the second filter material, if present, is a gas porous material such as felt.

Preferably, the method further comprises providing a collar around one or more of: a) a gas capture conduit of the gas well; and b) the extended gas capture conduit, which collar extends over an exposed surface of the first filter material to hinder gasses contained therein from escaping through that surface.

Preferably, the method further comprises gas well comprises an extended gas capture conduit such that the method serves to further extend that already extended gas capture conduit.

### Brief Description of the Drawings

Exemplary embodiments of the invention will now be described with reference to the accompanying drawings, in which:
Figure 1 show a cross-sectional view through a gas well assembly;
Figure 2 shows a side elevation of a gas well connector according to a preferred embodiment of the present invention;
Figure 2A shows a cross sectional view through the longitudinal axis of the gas well connector of Figure 2;
Figure 3 shows a cross-sectional view through the gas well of Figure 1 after the gas well connector of Figure 2 has been fitted and used to extend the gas capture conduit of the gas well of Figure 1; and
Figure 4 shows a cross-sectional view of the extended gas well assembly of Figure 3 wherein the full length of the gas capture conduit is being used to collect gas.

### Detailed Description of preferred Embodiments of the Invention

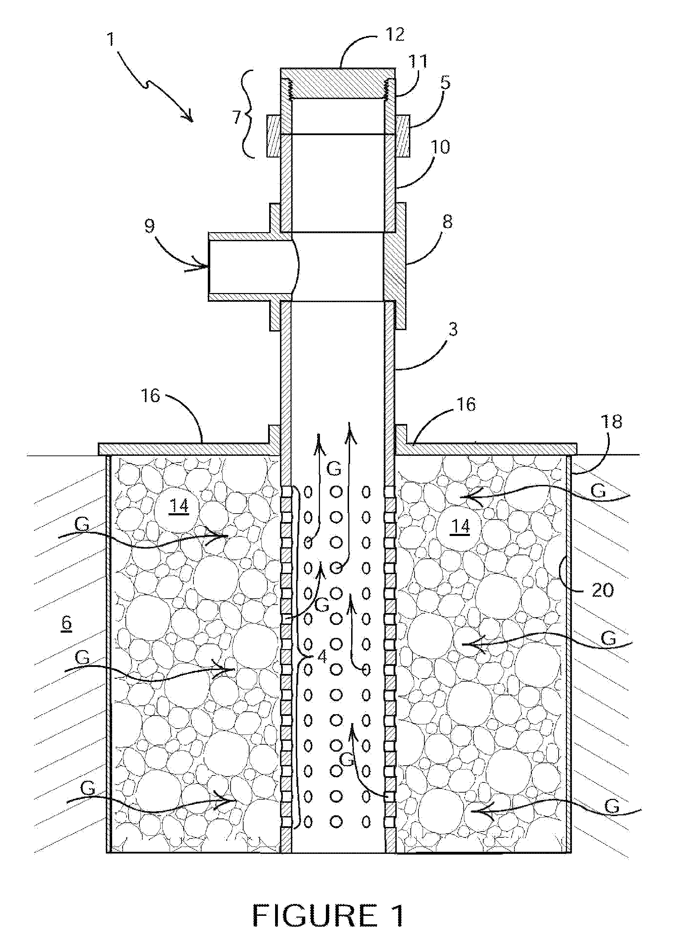

Illustrated in Figure 1 is the structure of a known gas well assembly 1; this gas well assembly 1 comprises a gas capture conduit 3 such as a gas pipe, an access means 8 such as a saddle or tee and a connector conduit 10, such as a connector pipe. The gas capture conduit 3 has a lower portion 4 that is gas porous, such as by being perforated with numerous apertures to allow gas into the gas capture conduit 3.

An upper portion of the gas capture conduit 3 is located into a suitably sized aperture in the access means 8.

In the gas well assembly of Figure 1, this access mean 8 comprises an electro-fusion tee, having a tee collar 11 dimensioned to abut an upper end of the gas capture conduit 3 at one end, and the connector conduit 10 at the other. The electro-fusion tee 8 connects the two conduits 3, 10 and provides an aperture through which gas flowing out of those conduits can flow into, through a nozzle 9 that extends from the electro-fusion tee 8. This nozzle 9 allows additional conduit to be sealed thereto by some connecting means, such as an additional electro-fusion coupler.

In an alternative embodiment, the access means of the gas assembly (not illustrated) is a saddle formed from two halves that, amongst other means can be fused, welded or clamped around the gas capture conduit. This saddle has a nozzle that extends from one of the halves and that is compatible with sealing to an additional conduit through, for example, electro-fusion coupling. In this instance, the connector conduit forms a portion of the gas conduit, which is to say that the two are integral with one another. The nozzle has an aperture that is provided proximate and adjacent a surface of the gas conduit and the saddle can be commissioned at any time by drilling a corresponding aperture into the side of the gas conduit, through the nozzle. The connection of the two halves of the saddle together results in a gas tight fit between the saddle and the gas conduit, so that gasses passing through the aforementioned drilled aperture are constrained to passing along the nozzle and thereafter into any additional conduit that is attached thereto.

In either of the above gas well embodiments, the connecting conduit 10 extends beyond the top of the access means 8. To a free end of the connecting conduit 10 is connected a well head 7, which well head comprises a short section of well head conduit 11 that is adapted to be capped by some capping means 12. For example, the well head conduit may be internally threaded to accept a threaded plug that forms the capping means 12. The well head 7 closes off the connecting conduit 10 by forming a gas-tight seal therewith. This gas tight seal may be provided, for example, by an electro-fusion coupler 5.

As illustrated, the gas well 1 is disposed in a bored well 18 in landfill material 6. Separating the gas capture conduit 3 from the land-fill material 6 is a first filter material 14. Preferably, the first filter material 14 is hard-core: composed of a multitude of relatively large-bore stone fragments or similar. One purpose of the first filter material 14 is that of preventing the perforations in the perforated section 4 of the gas capture conduit 3 becoming clogged by the landfill material 6, which clogging would compromise the ability of the gas capture conduit 3 to draw in the gasses produced by the landfill material 6. To this end the size of the material making up the first filter mater 14 is preferably chosen to be larger than the bore of the perforation holes in the perforated portion 4 of the gas capture conduit 3. Preferably, 20mm to 40mm non calcareous stone is used.

Disposed around the first filter material 14, at the interface 18 thereof with the landfill material 6, is preferably a layer of second filter material 20. The second filter material 20 is a felt-like substance or some other material that is gas porous, and that is resistant to clogging by the landfill material 6. One purpose of the second filter material 20 is that of maintaining the first filter material 14 in position around the gas capture conduit 3 without obstructing the flow of gasses produced by the landfill material 6 into the first filter material 14. Given the potential weight of the first filter material 14, such a retention structure is advantageous to prevent that first filter material 14 from sinking into the potentially relatively soft landfill material 6.

A cage structure (not shown) may optionally be provided around the first filter material 14 and, when present, the second filter material 20, to add additional structural integrity. The cage may, for example, be a metal mesh having apertures formed in it that are of sufficiently small diameter as to keep the first filter material 14 from passing therethrough.

A pipe collar 16 is shown disposed round the gas capture conduit 3 The pipe collar 16 is affixed to the exterior surface of the gas capture conduit 3 by some means such as welding, mechanical fasteners or chemical adhesion or utilising an "O" ring type seal. The pipe collar 16 is sized so as fit over the area of the first filter material 14, and thereby to act as a cap to block escape of any gasses passing therethrough that would otherwise be lost through a top surface of the first filter material 14. Preferably the periphery of the pipe collar 16 is adjacent to, or extends beyond, the upper edge of the second filter material 20.

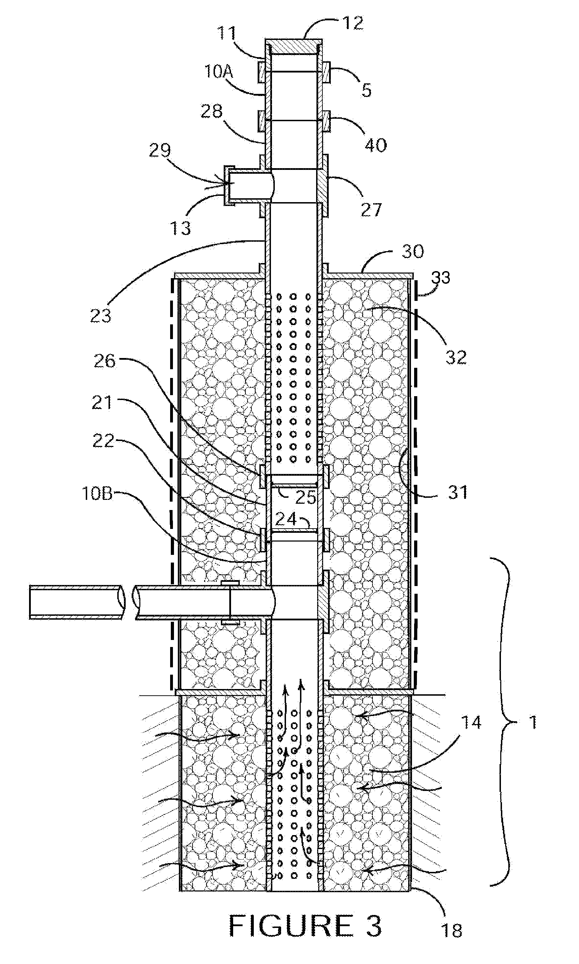

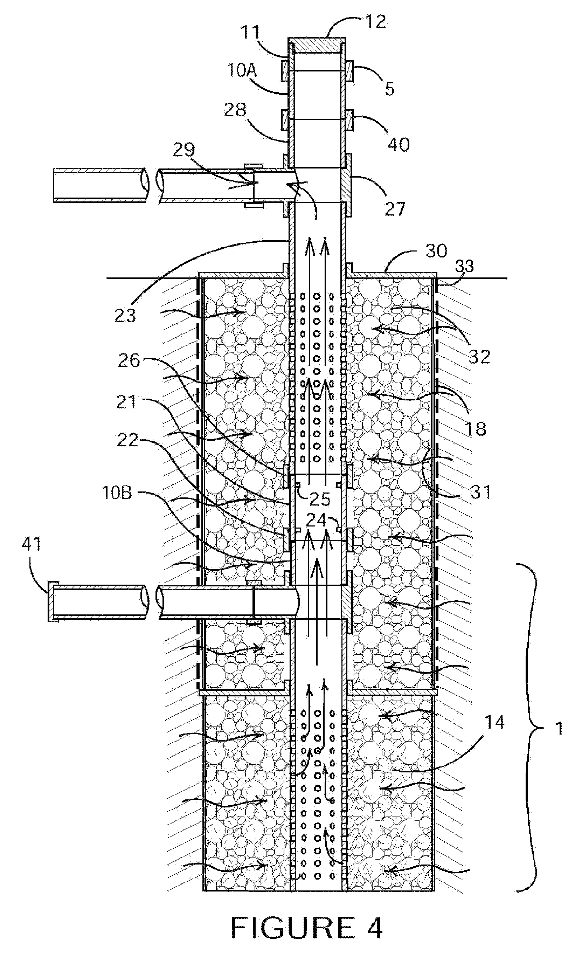

Figures 3 and 4 give exemplary illustrations of the passage of gasses G into the gas capture conduit 3 of the gas well 1, through the perforations in the perforated portion 4 of the gas capture conduit 3. These gasses are drawn in by a low pressure created inside the gas capture conduit 3 by a gas connection between the access means 8 and a low pressure source (not shown) such as a pumping device. The connection between the access means 8 and this low pressure device may be connected directly, or may be connected indirectly via, for example, a manifold of some kind. As the gasses are produced by the landfill material 6, they pass across the interface 18 between the landfill material 6 and the second filter material 20, and then subsequently through the first filter material 14 and into the gas capture conduit 3 through the perforations therein.

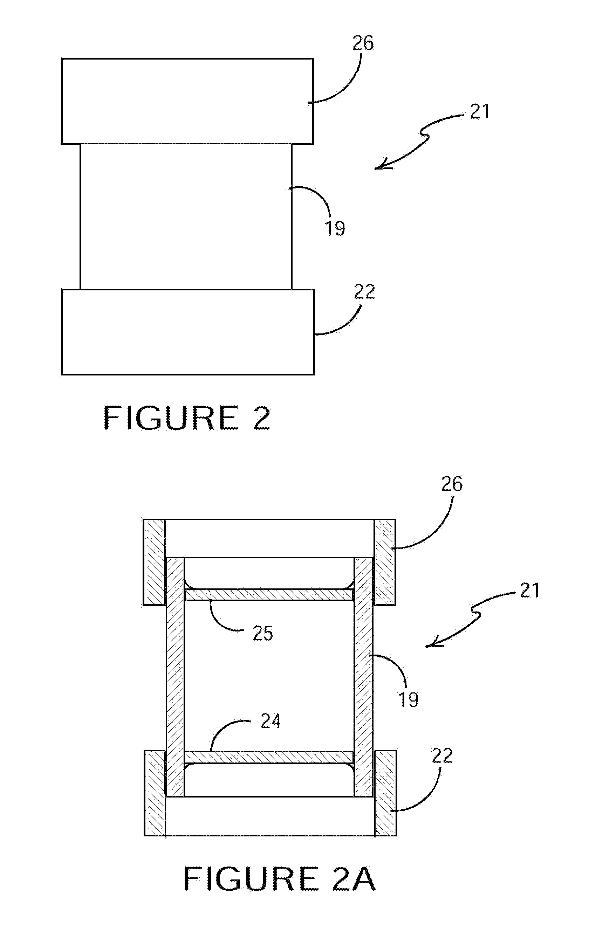

A preferred embodiment of a gas well connector 21 according to the present invention is shown in Figures 2 and 2A. This gas well connector 21 allows extension of a gas well, so that upon significant burial of the a first length of gas conduit, such as the gas conduit 3 of Figure 1, a second length of gas conduit may be appended to the first, thereby allowing the same well to be used without need of abandoning it.

The gas well connector 21 comprises a coupling conduit 19 that has been sealed by two closing means 24, 25. Each of these closing means forms a substantially gas-tight seal with the periphery of the interior surface of the coupling conduit 19. Preferably, the closing means 24, 25 are blanking plates that are welded where they contact the periphery of the coupling conduit 19 to form a gas-tight seal therewith. At either end of the coupling conduit 19 are provided electro-fusion couplers 22, 26, which are sized to fit around the exterior of the coupling conduit 19. The process of using the gas well connector 21 is as follows.

Once it becomes desirable to extend the first length of gas capture conduit 3 in the manner illustrated in Figure 3, the well head 7 is removed therefrom. Means for this removal include but are not limited to sawing or cutting the connector conduit 10, leaving a lower portion 10B thereof remaining connected to the tee 8, and an upper portion 10A connected to the now detached well head 7. This results in the remaining lower portion 10B providing an open upper edge ready to accept one end of the gas well connector 21.

One end of the gas well connector 21 is brought over the upper edge of the remaining lower portion 10B, thereby bringing that edge into abutment with adjacent edge of the connector conduit 19, with the adjacent electro-fusion connector 22 disposed around the contact surface between the two conduits 10B, 19. By operating the electro-fusion coupler 22, these two conduits become coupled to one another with a gas-tight seal between the two.

A second length of gas capture conduit 23 is then brought down into abutment with a free end of the coupling conduit 19, with the second electro-fusion coupler 26 disposed around the contact surface therebetween. This second electro-fusion coupler 26 is then operated to form a gas tight seal between the coupling conduit 19 and the extended gas capture conduit 23. This second length of gas capture conduit 23 is identical to the first 3, in that it comprises a gas porous portion, and in that it too has an access means 27 coupled to it to allow gas to be extracted from the interior volume thereof.

The closing means 24, 25 of the gas well connector 21 now act as a seal between the gas capture conduit 3 of the gas well 1 and the extended gas capture conduit 23; preventing cross contamination between the gases in the two. To prevent undesirable collection of material in the extended gas capture conduit 23, the nozzle 29 of the access means 27 attached to the second length of gas capture conduit 23 is capped with a fitment 13. This fitment may, for example, be a rubber cap that fits around an exterior surface of the nozzle 29, and covers the aperture thereof.

The well head 7 is then coupled to a connecting conduit 28 that extends from the access means 27 connected to the second length of gas capture conduit 23. This is achieved as above by using a third electro-fusion coupler 40 to form a gas-tight seal between the two.

On top of the first pipe collar 16 is placed a further arrangement of first 32 and second 31 filter materials. These materials 31, 32 are the same as those 14, 20 described in relation to the initial arrangement of the gas well 1. Again, a cage 33 is preferably positioned around the first 32 and, if present, second filter material 31 so as to enhance the structural integrity of the arrangement. This is particularly advantageous in that the extended gas capture conduit 23 extends upwardly beyond the surface of the land-fill material 6, and therefore the first filter material 14 benefits from having the cage 33 disposed around its periphery to keep the first filter material 14 in the desired arrangement around the extended gas capture conduit 23 along substantially its whole length. The cage 33 is preferably the metal mesh described above.

Until such time as the landfill material 6 has risen to a sufficient level as to cover the exterior of the second filter material 31 disposed around the second length of gas capture conduit 23 it is necessary to maintain the interior volume of the gas capture conduit 3 and the interior volume of the extended gas capture conduit 23 separate from one another, because the extended gas capture conduit 23 will be at least partially filled with air. Thus, the gas emitted by the land-fill material 6 continues to be drawn off from access means 8 of the gas capture conduit 3 of the gas well 10.

In order to commission the second length of gas capture conduit 23, and hence utilise the gas well 1 in its extended form (as is shown in Figure 4), the capping means 12 is briefly disengaged from the well head conduit 11 so that an opening means (not shown) for opening the closing means 24, 25 of the gas well connector 21 can be inserted therethrough. The opening means is preferably a drill sized to extend down the second length of gas capture conduit 23, to contact the closing means 24, 25 and thereby to open those closing means 24, 25 by, for example, cutting a hole therethrough. Once the closing means 24, 25 are opened in some way, gas can flow between the gas capture conduit 3 of the gas well 1 and the extended gas capture conduit 23. The capping means 12 is reengaged with the well head 7 to achieve a seal, and the conduit connected to nozzle 9 of the first access means 8 is capped with some capping means 41 or isolated at the manifold unit. The nozzle 29 of the second access means 28 may then be coupled to a low pressure source (not shown) to allow the gas well 1 to be used to draw off gasses produced by substantially the entire depth of the landfill material 6.

Should the level of the landfill material 6 continue to rise above the second length of gas capture conduit 23, a third and subsequent lengths of gas capture conduit (not shown) may be added in the same manner so that the maximum amount of gas may be drawn off without needing to create additional wells and abandon pre-existing pipes.

It can be appreciated that various changes may be made within the scope of the present invention, for example, the size and shape of the pipes and apertures may be adjusted to provide gas capture assemblies differing size or shape.

It is contemplated that the gas capture conduit 3 and the extended gas capture conduit 23 may be formed of gas conduit of any size and shape that suits the application. For example, the cross section may be amongst others, rectangular or ellipsoidal as desired. The material from which the gas capture conduit 3 or extended gas capture conduit 23 are constructed is preferably MDPE, though it is further contemplated that HDPE, LDPE or any other polymer utilised in pipe manufacture may be used instead.

The pipe collar 16, 30 may be affixed to the gas capture conduit 3, 23 by some means such as welding, mechanical fasteners, chemical bonding or "O" ring type seal. In an alternative embodiment, the pipe collar 16, 30 is not affixed to the exterior of the gas capture conduit 3 at all, and instead provides for a sliding engagement between the interior of the pipe collar 16, 30 and the exterior of the gas capture conduit 3.

The pipe collar 16, 30 is shaped so as to fit around the exterior surface of the gas capture conduit 3, 23, and therefore the profile of the interior edge of the pipe collar 16, 30 preferably matches the shape of that exterior surface.

It is contemplated that the engagement between the capping means 12 and the well head conduit 11 may be, amongst others, alternatively be a friction fit, or bayonet fitting or some other complementary indent/detent arrangement.

The closing means 24, 25 is preferably maintained in position in the connector conduit 19 by welding around at least one of the two sides of its periphery. Alternatively, the closing means 24, 25 could be engaged with the interior surface of the connector conduit 19 through, amongst other, friction fit, complementary threaded engagement, bayonet fitting or some such complementary indent/detent arrangement. It is also contemplated that the closing means 24, 25 is reconfigurable within the connector conduit 19 so as to be movable from a position in which they seal the connector conduit 19, to a position in which they no longer seal that connector conduit 19. This may be achieved by, amongst other alternatives, hinging the closing mean 24, 25 relative to the connector conduit 19. Another alternative for forming the closing means 24, 25 is that of forming them from a dissolvable material that can then later be dissolved by the opening means.

The opening means may alternatively break the closing means 24, 25 by, amongst others, punching through a portion thereof to provide an aperture there-through, or my melting/vaporising a portion thereof. Another alternative is for the opening means to provide an elongated tool to engage with, manipulate, and subsequently withdraw all or a portion of the closing means 24, 25 from the interior of the connector conduit 19, thereby providing an aperture for gas flow.

Where the opening means and the closing means are formed to complement on another, it is contemplated that this opening means may form a part of the invention, and provided with the gas well connector 21 as a part of a kit.

The connector conduit 10, 28 is preferably but not necessarily of the same cross section as the gas capture conduit 3, 23, so as to aid coupling of the two by the access means 8, 27.

The coupling means 22 is capable of joining the extended gas capture conduit 23 and the lower portion 10B of the connecting conduit 10 so as to arrive at a gas tight fit between the two. In alternative embodiments, the coupling device 22 is a mechanical fastening device, or is substituted for a joining process such as welding or chemically adhering the two aforementioned pipes 3, 10 together.

In an alternative embodiment of the invention, the connector conduit 19 of the gas well connector 21 is formed integrally with the extended gas capture conduit 23.

Any suitably porous filter material may be used for the first filter material 14, and in alternative embodiments the first filter material is a porous solid. Similarly, the second feeder material 20 may comprise any suitable porous material that resists clogging by the landfill material 6.

The description above details a preferred process of connecting two lengths 3, 23 of the gas capture conduit together. This process is exemplary in nature and it is contemplated that the order of the steps set out may be reordered and that additional steps may be performed in between, as required by the application.

Where the above description refers to "gas-tight" or similar, it is considered sufficient that the join or component in question prevent any substantial escape of the desired gasses; prevention of microscopic or otherwise negligible loss of gasses is not necessarily required.

It will be recognised that as used herein, directional references such as "top", "bottom", "front", "back", "end", "side", "inner", "outer", "upper" and "lower" do not limit the respective described features to such orientation, but merely serve to distinguish these features from one another to aid clarity of explanation.

## Claims

1. A gas well connector for connecting a gas well assembly (1) to an extended gas capture conduit (23), which gas well connector comprises a connector conduit (19) for conducting gas from the gas well assembly (1) to the extended gas capture conduit (23), the connector conduit (19) comprising a closing means (24) that prevents cross-contamination between the gas well (1) and the extended gas capture conduit (23).

2. The gas well connector according to Claim 1, wherein the closing means (24) comprises at least one blanking pate secured within the connecting conduit (19) to seal that conduit between two ends thereof.

3. The gas well connector according to Claim 1 or Claim 2, further comprising means for coupling the connector conduit (22, 26), at one end thereof, to the gas well (1) and at the other end thereof to the extended gas capture conduit (23).

4. Apparatus comprising a gas well connector according to any of Claims 1 to 3, coupled to or formed integrally with one or more of: a) the gas well (1); and b) the extended gas capture conduit (23).

5. A method of extending a gas well, which method comprises securing an extended gas capture conduit (23) to the gas well (1) using a gas well connector (21), and in particular, the gas well connector of claims 1 to 3.

6. The method according to Claim 5, further comprising forming a seal within the gas well connector (21) with a closing means (24) for preventing gas communication between an interior volume of the gas well (1) and an interior volume of the extended gas capture conduit (23).

7. The method according to Claim 6, further comprising opening the closing means (24) in the gas well connector (21) to allow gas communication between the interior volume of the gas well (1) and the interior volume of the extended gas capture conduit (23).

8. The method according to Claim 7, further comprising capping the end of the extended gas capture conduit (23) with a well head (7), which well head (7) has a releasable capping means (12), the method additionally comprising removing said capping means (12) and employing an opening means to provide said opening of the closing means (24).

9. The method according to any of Claims 5 to 8 further comprising fitting an access means (27) to the extended gas capture conduit (23), which access means (27) allows gasses contained in an interior volume of the extended gas capture conduit to be drawn out therethrough.

10. The method according to Claim 9, further comprising drawing off gasses through the access means (27).

11. The method according to any of Claims 5 to 10 further comprising providing a first volume of filter material (14) around the gas well (1) and around the extended gas capture conduit (23) to prevent any material in which the gas well (1) and the extended gas capture conduit (23) are situated from contacting the gas capture conduit (3) of the gas well (1) or the extended gas capture conduit (23).

12. The method according to Claim 11 further comprising providing one or more of: a) a second filter material (20); and b) a cage 33, around the first filter material to maintain the desired arrangement of first filter material (14).

13. The method according to Claim 11 or Claim 12, wherein the first filter material is hard-core and the second filter material (20), if present, is a gas porous material such as felt.

14. The method according to any of Claims 11 to 13, further comprising providing a collar (16, 30) around one or more of: a) a gas capture conduit (3) of the gas well (1); and b) the extended gas capture conduit (23), which collar (16, 30) extends over an exposed surface of the first filter material (14) to hinder gasses contained therein from escaping through that surface.

15. The method according to any of Claims 5 to 14, wherein the gas well (1) comprises an extended gas capture conduit (23) such that the method serves to further extend that already extended gas capture conduit.
